# EUROPEAN PATENT SPECIFICATION

(11) **EP 4 293 258 B1**
(45) Date of publication and mention of the grant of the patent: **12.03.2025**
(21) Application number: 23174711.4
(22) Date of filing: 23.05.2023
(51) Int. Cl.: F16K 27/06, F16K 31/53, F16K 31/05, F16K 31/04

(54) **VALVE ACTUATOR**
VENTILAKTUATOR
ACTIONNEUR DE SOUPAPE

(30) Priority: 14.06.2022 KR 20220071891
(43) Date of publication of application: 20.12.2023
(73) Proprietor: LG Electronics Inc., Yeongdeungpo-gu Seoul 07336 (KR)
(72) Inventor: KANG, Joohang, 08592 Seoul (KR); AHN, Youngchan, 08592 Seoul (KR)
(74) Representative: Vossius & Partner Patentanwälte Rechtsanwälte mbB

(56) References cited:
- EP-A1- 3 561 348
- BR-A- 9 603 575
- CN-U- 204 628 727
- JP-A- 2002 188 692
- JP-A- 2013 040 636
- US-A1- 2007 108 402
- US-A1- 2020 208 592

## Description

### BACKGROUND OF THE INVENTION

### Field of the Invention

The present disclosure relates to a valve actuator for opening and closing a refrigerant, and more particularly, to a valve actuator that can be used by additionally mounting on various sizes of standard type ball valves supplied as a standard product and already installed.

### Description of the Related Art

Refrigerants are essential for air conditioners, which are one of the air conditioning systems, and the first to third generation refrigerants that have been used previously have very high ozone layer depletion potential (ODP) and/or global warming potential (GWP).

Therefore, in recent years, fourth-generation refrigerants with low ozone depletion potential and/or global warming potential have been developed, and newly developed fourth-generation refrigerants, for example, hydrogen fluoroolefin (HFO)-based refrigerants, are more expensive than conventional refrigerants and are flammable, resulting in a risk of fire and/or explosion.

Therefore, the air conditioning system is provided with a ball valve for blocking refrigerant leakage.

The ball valve provided in an air conditioning system to block refrigerant leakage includes a ball in which a flow path is formed, a pipe into which the ball is inserted, a tap part provided in the pipe, and a stem installed in the tap part.

The ball valve of this configuration can open and close the refrigerant by rotating the stem, and the air conditioning system used for industrial purposes is provided with a valve actuator that is operated by an electrical signal input from the outside to block and operate the ball valve.

An example of a valve assembly equipped with a valve actuator is a model number A20-S-15-S2-SUS304 of DME Corp.

The valve assembly of DME Corp. is manufactured by assembling a valve actuator to a specially manufactured valve having a flange shape, and the valve actuator forms an appearance by inserting an upper case into a concave-convex portion of a lower case.

In this way, since the valve actuator provided in the valve assembly of DME Corp. can be assembled only to a specially manufactured valve having a flange shape, it is impossible to additionally install it on another standard type ball valve already installed in the field.

To explain this, ball valves used all over the world are manufactured in approximately 15 standards, and the tap part provided in the ball valve is manufactured in approximately three standards.

However, since the valve actuator provided in the valve assembly of DME Corp. can only be assembled to a specially manufactured valve having a flange shape as described above, it is impossible to additionally install it on other standard type ball valves already installed in the field.

In addition, the valve actuator provided in the valve assembly of DME Corp. forms an appearance by inserting an upper case into a concave-convex portion of a lower case.

However, since the valve actuator provided in the valve assembly of DME Corp. does not have a seal installed at the joint between the upper case and the lower case, it is difficult to block the inside of the valve actuator from the external environment.

Therefore, when the upper case and the lower case contract and expand due to a temperature difference, there is a problem in that airtightness is deteriorated because a minute gap is generated at the joint between the upper case and the lower case.

In addition, the valve actuator provided in the valve assembly of DME Corp. has a problem in that manual operation is impossible.

Another example of a valve assembly equipped with a valve actuator is a model number HQ004-15S1 of Auto valve Corp.

The valve assembly of Auto Valve Corp., like the valve assembly of DME Corp., is manufactured by assembling a valve actuator in a specially manufactured valve having a flange shape.

Therefore, since the valve actuator provided in the valve assembly of Auto Valve Corp. can be assembled only to a specially manufactured valve having a flange shape, it is impossible to additionally install it on another standard type ball valve already installed in the field.

Another example of a valve assembly equipped with a valve actuator is a model number BL7076-DN15.

The valve assembly of model number BL7076-DN15 is manufactured by assembling a valve actuator to a valve in the principle of fastening the bottle cap rather than a flange shape.

However, the valve assembly of the model number BL7076-DN15 has a problem in that the assembly of the valve and the valve actuator is disengaged due to a reaction force generated during rotation of the valve.

Another example of a valve assembly equipped with a valve actuator is the model number AT24-20-DC24 of Valcon Corp.

The valve actuator provided in the valve assembly of Valcon Corp. forms an appearance by inserting the upper case into the concave-convex portion of the lower case.

However, since the valve actuator provided in the valve assembly of Valcon Corp. does not have a seal installed at the joint between the upper case and the lower case. Further, in the valve actuator provided in the valve assembly of Valcon Corp. a separate mold is not installed at a portion where the wire part passes through the cover to connect the electric motor (40) provided inside the valve actuator to a power source. Thus, it is difficult to block the inside of the valve actuator from the external environment.

Therefore, when the upper case and the lower case contract and expand due to the temperature difference, there is a problem in that airtightness is deteriorated because a minute gap is generated at the joint between the upper case and the lower case.

US 2007/0108402 A1 **discloses a sealing hub assembly for a motor actuated valve having a stem boss and a stem rotatably received in the stem boss.** JP 2013 040636 A **discloses a rotary valve with an actuator.** CN 204 628 727 U **relates to coalmining facility and discloses an electrically moving ball valve with intrinsic safety.** JP 2002 188692

**A discloses a valve actuator carrying our rotational operation of a valve shaft. Additional prior art can be found in Patent Document** US 2001/0035510 A1.

### SUMMARY OF THE INVENTION

The present invention is defined by independent claim 1; the dependent claims describe embodiments of the present invention. An object of the present disclosure is to provide a valve actuator capable of solving at least one of the above problems.

Another object of the present disclosure is to provide a valve actuator that can solve the problem of the valve assembly applicable only to specially manufactured valves having a flange shape and the problem of the valve assembly assembled to the valve by the principle of fastening the bottle cap.

Still another object of the present disclosure is to provide a valve actuator that can be additionally mounted and used in standard ball valves of various sizes.

Still another object of the present disclosure is to provide a valve actuator having a flange so that the valve actuator can be additionally mounted on standard type ball valves of various sizes.

Still another object of the present disclosure is to provide a valve actuator having a flange capable of maintaining a good assembly state with the ball valve.

Still another object of the present disclosure is to provide a valve actuator having a flange capable of smoothly coupling the ball valve and the valve actuator even if the starting point of the thread provided in the tap part of the ball valve is not constant.

Still another object of the present disclosure is to provide a valve actuator that can maintain good airtightness even in environments with large temperature differences or submerged environments.

Still another object of the present disclosure is to provide a valve actuator having airtight performance of completely waterproof and dustproof (IP67).

Objects of the present disclosure are not limited to the above-mentioned objects, and other objects and advantages of the present disclosure not mentioned above can be understood by the following description and more clearly will be understood by the embodiments of the present disclosure.

It will also be readily seen that the objects and advantages of the present disclosure may be realized by the means and combinations indicated in the claims.

A valve actuator according to an embodiment of the present disclosure includes a flange coupled to a flange coupling part of a housing by a fastening member including screws and bolts, and the flange includes a tap part screwed to a tap part of a ball valve.

According to this configuration, since the flange is provided separately from the ball valve and the housing, it is possible to additionally install the valve actuator on ball valves of various standards already installed in the field.

The flange may include a tap part insertion hole having a tap part, which is formed on an inner surface of the tap portion insertion hole, to be screwed into the tap part of the ball valve; a stem insertion hole communicating with the tap part insertion hole and into which a stem of the ball valve is inserted; and a plurality of long holes positioned at a constant distance from a center of the tap part insertion hole and formed long in a circumferential direction.

In addition, the flange coupling part of the housing may include a plurality of circular grooves into which the plurality of fastening members passing through the plurality of long holes are fastened, respectively, and each of the plurality of long holes may communicate with at least one of the plurality of circular grooves.

In this case, the number of the plurality of circular grooves may be formed twice or more than the number of the plurality of long holes.

According to this configuration, when screwing the flange to the tap part of the ball valve, even if the starting point of the thread formed in the tap part of the ball valve is not constant, the ball valve and the flange may be smoothly fastened.

In addition, when the flange is coupled to the tap part of the ball valve and then the housing is coupled to the flange, the flange can be smoothly coupled to the flange coupling part of the housing even if a rotational phase of the flange is different.

A distance between two adjacent long holes may be formed smaller than a distance between two adjacent circular grooves, and a bridge may be positioned between two adjacent long holes, and a width of the bridge may be formed smaller than a length of the long hole.

According to this configuration, the flange can maintain appropriate strength due to the bridge.

A chamfer may be formed on an inner surface of the tap part insertion hole of the flange, and in a state in which the flange and the ball valve are coupled, the chamfer of the flange may be contact with the chamfer formed at an upper end of the tap part of the ball valve.

According to this configuration, since a support reaction force is formed by the chamfers in contact with each other, even if a valve turning torque is greater than a screw fastening force between the tap part of the flange and the tap part of the ball valve, the assembly state of the flange and the ball valve can be maintained well.

In addition, when screwing the flange to the tap part of the ball valve, even if the starting point of the thread formed in the tap part of the ball valve is not constant, the ball valve and the flange may be smoothly fastened.

The housing may have a power line passage hole through which an external power line for supplying power to the motor passes, and an adhesive may be applied to the power line passage hole in a state where the external power line passes through.

According to this configuration, it is possible to prevent moisture from entering the inside of the housing through the power line passage hole.

An inner surface of the housing around the power line passage hole may be provided with an adhesive receiving groove formed larger than the power line passage hole and in which a portion of the adhesive is positioned.

According to this configuration, it is possible to prevent the adhesive applied to the power line passage hole from being separated and/or detached from the power line passage hole.

The housing includes a lower case and an upper case coupled to the lower case, and a seating part on which a protruding jaw of a middle plate disposed in the inner space of the housing is seated is formed at an upper end of the lower case, and a first sealing ring is disposed on the seating part, the first sealing ring being supported by a lower end of the upper case, a seating part of the lower case, and a protruding jaw of the middle plate.

According to this configuration, it is possible to effectively seal the inside of the housing while the first sealing ring is pressed in the vertical direction by the upper case and the lower case.

Therefore, when the upper case and the lower case contract and expand due to the temperature difference, it is possible to prevent airtightness from deteriorating due to a minute gap between the upper case and the lower case.

A second sealing ring may be disposed between an upper surface of the flange and a lower surface of the flange coupling part.

According to this configuration, it is possible to prevent moisture from entering the inside of the housing through a minute gap formed between the flange and a flange coupling part.

The motor and the gear assembly may be disposed in a space between the middle plate and the lower case.

According to this configuration, since the length of the axis coupled to the rotation shaft of the motor and the gears of the gear assembly may be shortened, and the size of the space formed by the middle plate and the upper case may be greatly reduced, the size of the valve actuator may be further reduced.

The gear assembly includes an input gear coupled to a rotation shaft of the motor and rotating together with the rotation shaft, and an output gear positioned apart from the input gear in a horizontal direction, coupled to a stem of the ball valve, and transmitting a rotational force of the input gear to the stem; and a power transmission gear transmitting the rotational force of the input gear to the output gear.

The power transmission gear includes a clutch shaft having both ends coupled to the middle plate and the lower case so as to be movable in the vertical direction, and a first gear set having a first gear and a second gear coupled to the clutch shaft and disengaged from each other or coupled to each other by vertical movement of the clutch shaft.

According to this configuration, since the middle shaft (shaft of power transmission gear) of the gear train, not the output shaft to which the output gear is coupled, is formed as the clutch shaft, the clutch shaft may be operated with a smaller force compared to the case where the output shaft is used as the clutch shaft.

Therefore, a smaller spring than a conventional return spring for returning the output shaft to its original position may be used as the return spring.

In addition, since it is possible to couple or disengage between the first and second gears according to the vertical movement of the clutch shaft, when the clutch shaft is operated, coupling between gears is disengaged, not disengagement of coupling between gear teeth.

Therefore, when the clutch shaft moves in the vertical direction, the influence on the teeth of the input gear, the output gear, and the power transmission gear may be minimized.

A coupling part for coupling the first gear to the second gear is protruded from a lower surface of the first gear coupled to the input gear, and a coupling part insertion groove into which the coupling part of the first gear is inserted may be formed on an upper surface of the second gear.

The coupling part and the coupling part insertion groove may be formed in shapes corresponding to each other, and the planar shape may be formed into an elliptical, polygonal, or splined shape.

According to this configuration, the height or thickness of the first gear set in the vertical direction may be reduced.

Accordingly, since the size of the space formed by a middle plate and a lower case can be reduced, the size of the valve actuator can be reduced.

A push-up part is formed on the clutch shaft to push the first gear upward in contact with the coupling part of the first gear, and the push-up part may be positioned in a push-up part insertion groove formed on a lower surface of the coupling part of the first gear.

According to this configuration, the height or thickness of the first gear set in the vertical direction may be reduced.

Accordingly, since the size of the space formed by the middle plate and the lower case can be reduced, the size of the valve actuator may be further reduced.

The first gear may be pressed toward the second gear by a return spring disposed between the first gear and the middle plate.

According to this configuration, the first gear and the second gear are maintained in a coupling state between gears before the valve actuator operates.

When the clutch shaft is pressed upward, the first gear is pushed up by the push-up part while the return spring is pressed, and thus the coupling between the first gear and the second gear is disengaged.

After that, when the pressing of the clutch shaft is disengaged, the first gear is pressed downward by the return spring, and when the output shaft of the output gear rotates and the coupling part of the first gear is inserted into the coupling part insertion groove of the second gear, the first gear and the second gear are coupled again.

Therefore, when the clutch shaft moves in the vertical direction, the influence on the teeth of the input gear, the output gear, and the power transmission gear may be minimized.

A snap ring may be installed on the clutch shaft between the return spring and an upper surface of the first gear.

According to this configuration, when the first gear does not move downward due to a malfunction of the return spring despite disengaging the pressing of the clutch shaft, the first gear and the second gear may be coupled by pulling the clutch shaft downward.

A third seal ring may be disposed on the clutch shaft below the second gear, and a guide groove may be formed in the lower case where the clutch shaft is coupled and allow the third seal ring to move in the vertical direction together with the clutch shaft when the clutch shaft moves in the vertical direction.

According to this configuration, a movement distance of the clutch shaft in an upward direction may be set by a gap between the third seal ring and the second gear.

In addition, the third seal ring and/or the lower case may support the second gear in a state in which the coupling between the gears of the first gear and the second gear is disengaged.

The lower end of the output shaft coupled with the output gear may be coupled to the stem of the ball valve, and the upper end of the output shaft may protrude out of the upper case, and a fourth sealing ring may be disposed between the output shaft and the lower case between the lower end of the output shaft and the output gear.

According to this configuration, it is possible to prevent the refrigerant flowing along the ball valve from entering the inside of the valve actuator.

A fifth sealing ring may be disposed between the output shaft and the upper case between the upper end of the output shaft and the output gear.

According to this configuration, it is possible to prevent moisture from entering the inside of the housing through a minute gap formed between the upper case and the output shaft.

The power transmission gear may further include a second gear set disposed adjacent to the first gear set in the horizontal direction, and wherein the second gear set may include a third gear coupled to the first gear; and a fourth gear positioned above the third gear, integrally rotating with the third gear, and coupled with the output gear.

The third gear and the fourth gear may be integrally formed or may be manufactured separately and coupled to each other similarly to the first and second gears.

According to this configuration, it is possible to further simplify the configuration of the gear assembly including the power transmission gear.

In the upper case, a cap covering the upper end of the output shaft protruding out of the upper case may be installed, and the cap may cover the minute gap between the output shaft and the upper cover.

According to this configuration, it is possible to more effectively prevent moisture from entering the inside of the housing through the minute gap formed between the upper case and the output shaft.

According to the valve actuator according to the embodiment of the present disclosure, it is possible to solve the problem of the valve assembly applicable only to specially manufactured valves having a flange shape and the problem of the valve assembly assembled to the valve by the principle of fastening the bottle cap.

In addition, the valve actuator according to the embodiment of the present disclosure can be additionally mounted and used in standard ball valves of various sizes.

In addition, the valve actuator according to the embodiment of the present disclosure can maintain a good assembly state with the ball valve.

In addition, the valve actuator according to the embodiment of the present disclosure can be smoothly engaged with the ball valve even if the starting point of the thread provided in the tap part of the ball valve is not constant.

In addition, the valve actuator according to the embodiment of the present disclosure can maintain good airtightness even in an environment with a large temperature difference or an inundation environment.

In addition, the valve actuator according to the embodiment of the present disclosure can have airtight performance of completely waterproof and dustproof (IP67).

In addition to the above effects, specific effects of the present disclosure will be described together while explaining specific details for implementing the description below.

### BRIEF DESCRIPTION OF THE DRAWINGS

FIG. 1 is a view showing a state in which a valve actuator and a ball valve are assembled according to an embodiment of the present disclosure.
FIG. 2 is an exploded perspective view of main parts of FIG. 1, as viewed from above.
FIG. 3 is an exploded perspective view of main parts of FIG. 1, as viewed from bottom.
FIG. 4 is a plan view of the flange.
FIG. 5 is a cross-sectional view of a flange.
FIG. 6 is a perspective view of a gear assembly in which a first gear and a second gear coupled to a clutch shaft are disassembled, as viewed from above.
FIG. 7 is a perspective view of a gear assembly in which a first gear and a second gear coupled to a clutch shaft are disassembled, as viewed from bottom.
FIG. 8 is a cross-sectional view showing a state in which an output shaft of a gear assembly is assembled to a housing and a flange.
FIG. 9 is a cross-sectional view showing a state in which a clutch shaft, first gear, and second gear of a gear assembly are assembled to a housing.
FIG. 10 is a cross-sectional view showing a state in which a clutch shaft of a gear assembly is pressed.
FIG. 11 is a cross-sectional view showing a state in which an adhesive is applied to a power line passage hole of a housing.

### DETAILED DESCRIPTION OF THE EMBODIMENTS

Hereinafter, the embodiments of the present disclosure will be described in detail with reference to the drawings so that those skilled in the art can easily carry out the embodiments of the present disclosure. The present disclosure may be implemented in many different forms and is not limited to the embodiments described herein.

In order to clearly describe the present disclosure, parts irrelevant to the description are omitted, and the same reference numerals are assigned to the same or similar components throughout the specification. In addition, some embodiments of the present disclosure will be described in detail with reference to exemplary drawings.

In adding reference numerals to components of each drawing, the same components may have the same numerals as much as possible even though they are displayed on different drawings. In addition, in describing the present disclosure, when it is determined that a detailed description of a related known configuration or function may obscure the gist of the present disclosure, the detailed description may be omitted.

In describing the components of the present disclosure, when a component is described as "connected", "coupled" or "contacted" to another component, the component may be directly connected or contacted to the other component, but it should be understood that other components may be "interposed" between each component, or each component may be "connected", "coupled" or "contacted" via other components.

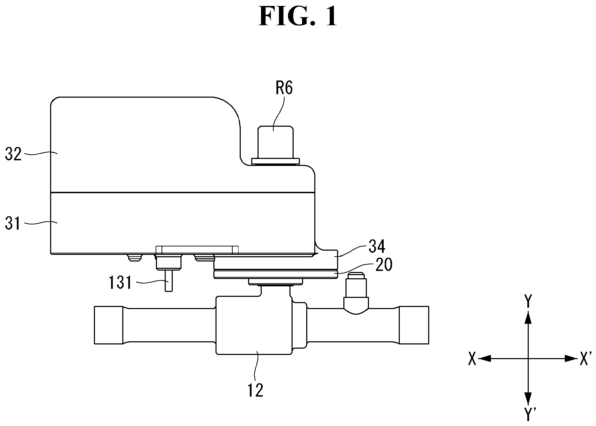

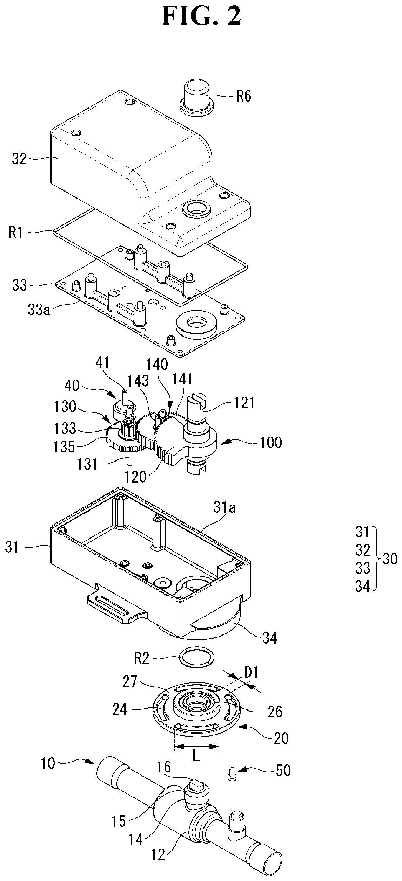

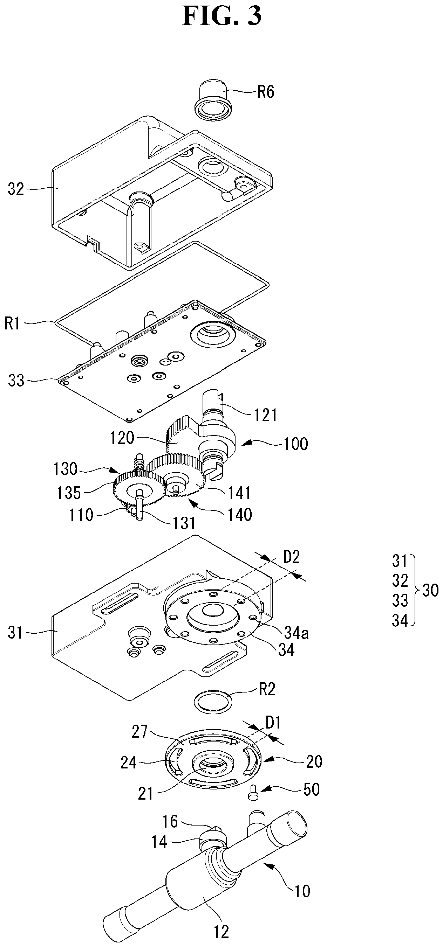

FIG. 1 is a view showing a state in which a valve actuator and a ball valve are assembled according to an embodiment of the present disclosure, FIG. 2 is an exploded perspective view of main parts of FIG. 1, as viewed from above, and FIG. 3 is an exploded perspective view of main parts of FIG. 1, as viewed from bottom.

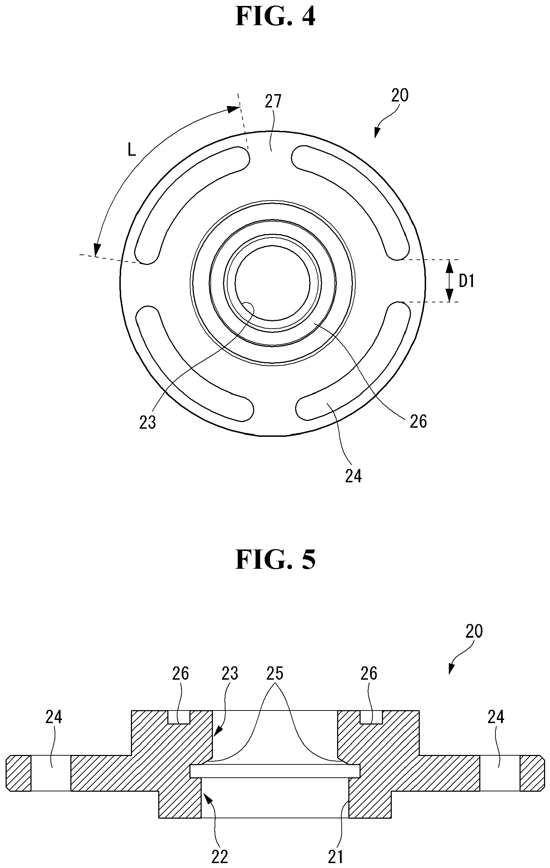

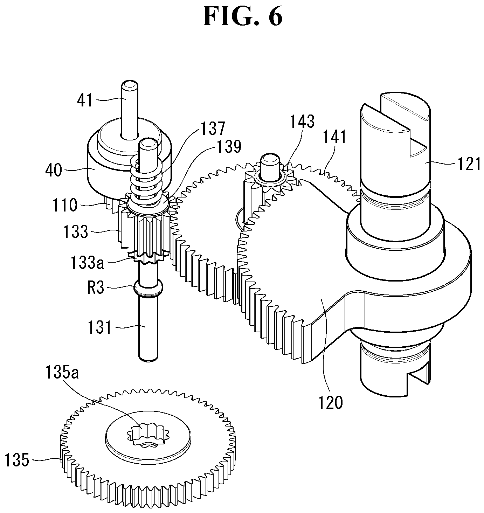

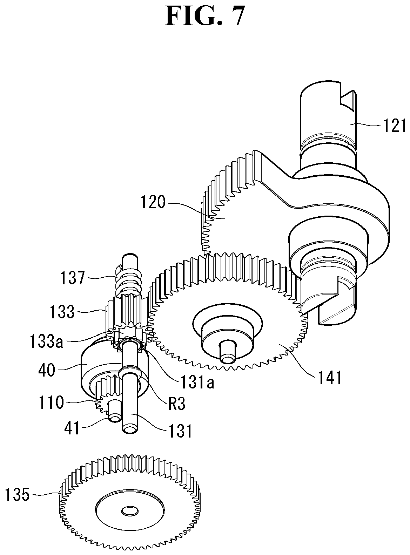

In addition, FIG. 4 is a plan view of the flange, FIG. 5 is a cross-sectional view of a flange, FIG. 6 is a perspective view of a gear assembly in which a first gear and a second gear coupled to a clutch shaft are disassembled, as viewed from above, and FIG. 7 is a perspective view of a gear assembly in which a first gear and a second gear coupled to a clutch shaft are disassembled, as viewed from bottom.

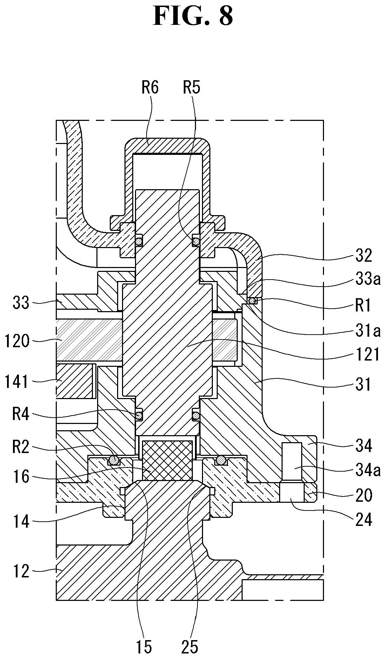

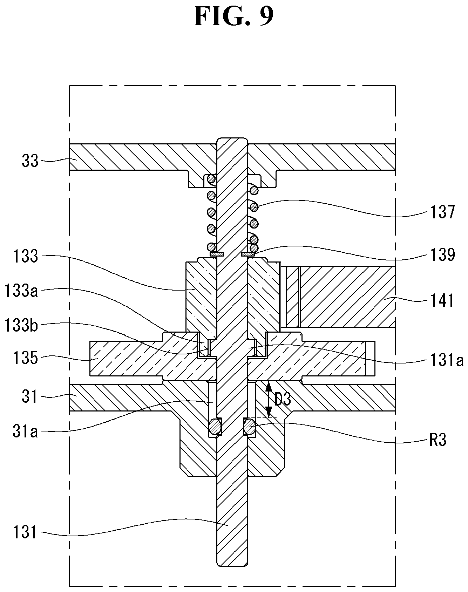

FIG. 8 is a cross-sectional view showing a state in which an output shaft of a gear assembly is assembled to a housing and a flange, and FIG. 9 is a cross-sectional view showing a state in which a clutch shaft, first gear, and second gear of a gear assembly are assembled to a housing.

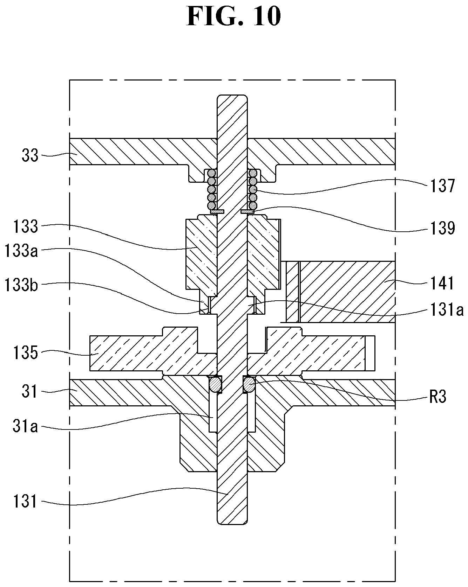

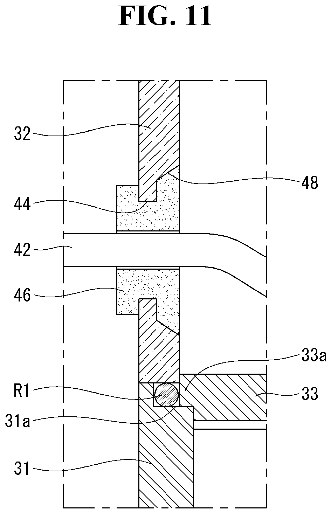

FIG. 10 is a cross-sectional view showing a state in which a clutch shaft of a gear assembly is pressed, and FIG. 11 is a cross-sectional view showing a state in which an adhesive is applied to a power line passage hole of a housing.

A ball valve 10 provided in the air conditioning system to block refrigerant leakage includes a ball in which a flow path is formed, a pipe 12 into which the ball is inserted, a tap part 14 provided in the pipe 12, and a stem 16 installed on the tap part 14.

In order to install a valve actuator on the tap part 14 of the standardized ball valve 10 of this configuration, the valve actuator of the present disclosure includes a flange 20 screwed to the tap part 14 of the ball valve 10 but coupled to a housing 30 of the valve actuator by a fastening member such as a screw or bolt.

In this way, according to the structure in which the flange 20 is provided separately from the ball valve 10 and the housing 30 and coupled to the ball valve 10 and the housing 30 by a separate fastening member or a separate fastening method, it is possible to additionally install the valve actuator to the ball valves 10 of various standards already installed in the field.

The flange 20 includes a tap part insertion hole 22, and the tap part insertion hole 22 includes a tap part 21 formed on an inner surface of screwed to the tap part 14 of the ball valve.

In addition, a stem insertion hole 23 communicating with the tap part insertion hole 22 and into which the stem 16 of the ball valve 10 is inserted, and a plurality of long holes 24 positioned at a certain distance from the center of the tap part insertion hole 22 and formed long in the circumferential direction are further provided.

In addition, the flange 20 has a chamfer 25 formed on the inner surface of the tap part insertion hole 22.

In addition, a chamfer 15 having a shape corresponding to the chamfer 25 of the flange 20 is formed at the top of the tap part 14 of the ball valve 10.

Thus, in a state where the flange 20 is screwed to the tap part 14 of the ball valve 10, the chamfer 25 of the flange 20 is in contact with the chamfer 15 formed at the upper end of the tap part 14 of the ball valve 10.

According to this configuration, a supporting reaction force is formed by the chamfers 15 and 25 in contact with each other in a state where the flange 20 is screwed to the tap part 14 of the ball valve 10.

Therefore, even if the valve turning torque is greater than the screw fastening force between the tap part 21 of the flange 20 and the tap part 14 of the ball valve 10, loosening between the tap part 21 of the flange 20 and the tap part 14 of the ball valve 10 is suppressed, and the assembly state between the tap part 21 of the flange 20 and the tap part 14 of the ball valve 10 is maintained well.

In addition, when screwing the tap part 21 of the flange 20 to the tap part 14 of the ball valve 10, even if the starting point of the thread formed in the tap part 14 of the ball valve 10 is not constant, it is possible to smoothly screw the tap part 21 of the flange 20 to the tap part 14 of the ball valve 10.

The flange 20 further includes a ring insertion groove 26 formed on the upper surface and in which a second seal ring R2 is disposed

According to this configuration, it is possible to prevent moisture from entering the inside of the housing 30 through a minute gap formed between the flange 20 and a flange coupling part 34.

The housing 30 provides a space in which a motor 40 and a gear assembly 100 provided in the valve actuator are installed.

The housing 30 includes a lower case 31, an upper case 32 coupled to the lower case 31, an middle plate 33 positioned in an inner space formed by the lower case 31 and the upper case 32, and a flange coupling part 34 provided on the lower case 31 and coupled to the flange 20.

In this embodiment, the motor 40 and the gear assembly 100 will be described as an example of being disposed in a space formed by the middle plate 33 and the lower case 31.

However, the motor 40 may be disposed in a space formed by the middle plate 33 and the upper case 32, in this case, the arrangement of the plurality of gears provided in the gear assembly 100 may be different from the arrangement structure described in the present embodiment.

However, even if the arrangement position of the motor 40 and the gear assembly 100 and the arrangement structure of the gear assembly 100 are partially different from those of the present embodiment, it falls within the scope of the present disclosure if it includes the features of the present disclosure.

The flange coupling part 34 of the housing 30 has a plurality of circular grooves 34a into which a plurality of fastening members 50 passing through the plurality of long holes 24 are fastened, respectively.

Each of the plurality of long holes 24 communicates with at least one of the plurality of circular grooves 34a.

At this time, the number of the plurality of circular grooves 34a may be formed to be twice or more than the number of the plurality of long holes 24.

In this way, when the number of the plurality of circular grooves 34a is formed to be twice or more than the number of the plurality of long holes 24, when screwing the flange 20 to the tap part 14 of the ball valve 10, even if the starting point of the thread formed in the tap part 14 of the ball valve 10 is not constant, the flange 20 may be smoothly screwed into the tap part 14 of the ball valve 10.

However, it is also possible to form the number of the plurality of circular grooves 34a to be the same as the number of the plurality of long holes 24.

In addition, it is also possible to form the number of the plurality of circular grooves 34a to be 1.5 times or more and less than 2 times the number of the plurality of long holes 24.

According to this configuration, after screwing the tap part 21 of the flange 20 to the tap part 14 of the ball valve 10, when coupling the housing 30 to the flange 20 using the fastening member 50, even if the rotational phase of the flange 20 is different, the flange 20 can be smoothly fastened to the flange coupling part 34 of the housing 30.

Here, the rotational phase of the flange 20 may vary depending on the starting point of a thread provided in the tap part of the ball valve.

Therefore, the flange 20 can be coupled to ball valves 10 of different various standards with starting points of threads provided in the tap part.

A distance D1 between the two adjacent long holes 24 is smaller than a distance D2 between the two adjacent circular grooves 34a.

In addition, a bridge 27 is positioned between the two adjacent long holes 24, and the width of the bridge 27, that is, the distance D1 between the two adjacent long holes 24 is smaller than the length L of the long holes 24.

Thus, the strength of the flange 20 is properly maintained due to the bridge 27.

The housing 30 may have a power line passage hole 44 through which an external power line 42 for supplying power to the motor 40 passes, and an adhesive 46 may be applied to the power line passage hole 44 in a state where the external power line 42 passes through.

The power line passage hole 44 may be formed in the lower case 31 or the upper case 32.

Unlike this, one power line passage hole 44 may be partially formed in each of the lower case 31 and the upper case 32, and it may be formed as a whole in a state in which the lower case 31 and the upper case 32 are coupled.

When the adhesive 46 is applied to the power line passage hole 44, it is possible to prevent moisture from entering the inside of the housing 30 through the power line passage hole 44.

In order to prevent the adhesive 46 applied to the power line passage hole 44 from being separated and/or detached from the housing 30, the inner surface of the housing 30 around the power line passage hole 44 is provided with an adhesive receiving groove 48 formed larger than the power line passage hole 44 and in which a portion of the adhesive 46 is positioned.

Therefore, it is possible to prevent the adhesive 46 applied to the power line passage hole 44 from being separated and/or detached from the power line passage hole 44.

A seating part 31a on which a protruding jaw 33a of the middle plate 33 is seated is formed at an upper end of the lower case 31 of the housing 30.

In addition, a first seal ring R1 is disposed on the seating part 31a of the lower case 31.

The first seal ring R1 is supported by a lower end of the upper case 32, the seating part 31a of the lower case 31, and the protruding jaw 33a of the middle plate 33, respectively.

According to this configuration, the first seal ring R1 is pressed in the vertical (Y-Y') direction by the upper case 32 and the lower case 31.

In addition, the first seal ring R1 is pressed in the horizontal (X-X') direction by the protruding jaw 33a of the middle plate 33 and the seating part 31a of the lower case 31, or supported in the horizontal (X-X') direction by the protruding jaw 33a of the middle plate 33 and the seating part 31a of the lower case 31.

Therefore, when the upper case 32 and the lower case 31 contract and expand due to the temperature difference during use of the valve actuator, it is possible to prevent airtightness from deteriorating due to a minute gap between the upper case 32 and the lower case 31.

The motor 40 and the gear assembly 100 are disposed in a space formed by the lower case 31 and the middle plate 33 in the inner space of the housing 30.

However, the motor 40 may be disposed in a space formed by the middle plate 33 and the upper case 32, in this case, the arrangement of the plurality of gears provided in the gear assembly 100 may be different from the arrangement structure described in the present embodiment.

However, even if the arrangement position of the motor 40 and the gear assembly 100 and the arrangement structure of the gear assembly 100 are partially different from those of the present embodiment, it falls within the scope of the present disclosure if it includes the features of the present disclosure.

When the motor 40 and the gear assembly 100 are disposed in the space formed by the lower case 31 and the middle plate 33 in the inner space of the housing 30, the length of the rotation shaft of the motor 40 and the shaft coupled to the gears of the gear assembly 100 may be formed short, and the size of the space formed by the middle plate 33 and the upper case 32 may be reduced. Accordingly, the size of the valve actuator may be reduced.

The motor 40 may be a type of motor with precise rotational control. However, this is not essential and may be a type of motor with imprecise rotational control. Also, the motor 40 may be a normal/reverse rotation motor.

The gear assembly 100 includes an input gear 110 coupled to a rotation shaft 41 of the motor 40 and rotating together with the rotation shaft 41, and an output gear 120 positioned apart from the input gear 110 in the horizontal (X-X') direction

The gear assembly 100 further includes power transmission gears 130 and 140 that transmit the rotational force of the input gear 110 to the output gear 120.

The output gear 120 is coupled to the stem 16 of the ball valve 10 and transmits the rotational force of the input gear 110 to the stem 16 of the ball valve 10.

In the present disclosure, the power transmission gear includes a first gear set 130 and a second gear set 140 disposed adjacent to the first gear set 130 in the horizontal (X-X ') direction.

The first gear set 130 includes a clutch shaft 131 having both ends coupled to the middle plate 33 and the lower case 31 so as to be movable in the vertical (Y-Y') direction.

In addition, the first gear set 130 further includes a first gear 133 and a second gear 135 that are coupled to the clutch shaft 131 and disengaged from each other or coupled to each other by the movement of the clutch shaft 131 in the vertical (Y-Y') direction.

The clutch shaft 131 and the first gear set 130 constitute a clutch unit in the valve actuator of the present disclosure.

If the clutch unit is not operated in a state in which the motor 40 is driven and the ball valve 10 blocks the flow of refrigerant, when trying to return the ball valve 10 to its original position (a position where refrigerant flow is possible) in a state where the gears of the gear assembly are meshed with each other, there is a possibility that the teeth of the gears provided in the gear assembly may be damaged.

In order to solve this problem, a clutch unit may be provided in the valve actuator.

By the way, in the conventional valve actuator, as disclosed in US 2001/0035510 A1, the clutch unit is installed on the output shaft of the gear assembly.

Therefore, since the output shaft moves in two directions, a rotational direction and a vertical (Y-Y') direction, there is a problem in that sealing performance is deteriorated, and since the output shaft has to move in the vertical (Y-Y') direction there is a problem in that the size of the product increases.

In addition, since a large rigid return spring is required to return the output shaft, and the engagement between the gear teeth is directly disengaged, there is a problem in that gear teeth are adversely affected.

However, according to the structure of the clutch unit of the present disclosure, since the middle shaft (shaft of the power transmission gear) of the gear train, not the output shaft, is formed as the clutch shaft 131, the clutch shaft 131 can be operated with less force compared to the case where the output shaft is used as the clutch shaft.

In addition, since the first gear 133 and the second gear 135 may be coupled or disengaged according to the movement of the clutch shaft 131 in the vertical (Y-Y') direction, when the clutch shaft 131 is operated, coupling between gears is disengaged, not disengagement of coupling between gear teeth.

Therefore, when the clutch shaft 131 moves in the vertical (Y-Y') direction, the influence on the teeth of the input gear 110, the output gear 130, and the power transmission gears 130 and 140 can be minimized.

A coupling part 133a for coupling the first gear 133 to the second gear 135 protrudes from the lower surface of the first gear 133 coupled to the input gear 110.

In addition, a coupling part insertion groove 135a into which the coupling part 133a of the first gear 133 is inserted is formed on the upper surface of the second gear 135.

The coupling part 133a and the coupling part insertion groove 135a may be formed in shapes corresponding to each other.

Although the accompanying drawings show that the planar shape of the coupling part 133a and the coupling part insertion groove 135a is formed in a spline shape, the planar shape of the coupling part 133a and the coupling part insertion groove 135a may be formed in various shapes such as an ellipse or a polygon.

When the coupling part 133a of the first gear 133 is inserted into the coupling part insertion groove 135a of the second gear 135, the height or thickness of the first gear set 130 in the vertical (Y-Y') direction may be reduced.

Accordingly, since the size of the space formed by the middle plate 33 and the lower case 31 can be reduced, the size of the valve actuator can be reduced.

A push-up part 131a is formed on the clutch shaft 131 to push the first gear 133 upward in contact with the coupling part 133a of the first gear 133.

In addition, a push-up part insertion groove 133b is formed on the lower surface of the coupling part 133a of the first gear 133.

Therefore, the push-up part 131a of the clutch shaft 131 is inserted into the push-up part insertion groove 133b formed on the lower surface of the coupling part 133a of the first gear 133.

When the push-up part 131a of the clutch shaft 131 is inserted into the push-up part insertion groove 133b formed on the lower surface of the coupling part 133a of the first gear 133, the height or thickness of the first gear set 130 in the vertical (Y-Y') direction may be reduced.

Therefore, since the size of the space formed by the middle plate 33 and the lower case 31 can be further reduced, the size of the valve actuator can be further reduced.

A return spring 137 is disposed on the clutch shaft 131 above the first gear 133.

Accordingly, the first gear 133 may be pressed toward the second gear 135 by the return spring 137.

According to this configuration, the first gear 133 and the second gear 135 are kept coupled with each other between the gears before the valve actuator operates.

That is, before the operation of the valve actuator, since the coupling part 133a of the first gear 133 is coupled to the coupling part insertion groove 135a of the second gear 135, the first gear 133 and the second gear 135 are kept coupled with each other between the gears.

In addition, after the operation of the valve actuator when the clutch shaft 131 is pressed from the bottom to the top to return the ball valve to its original position, while the return spring 137 is pressed, the first gear 133 is pushed up by the push-up part 131a, and accordingly, the coupling between the first gear 133 and the second gear 135 is disengaged.

In this state, when pressing of the clutch shaft 131 is disengaged while rotating the output shaft 121 by inserting a tool such as a screwdriver into a groove formed at the upper end of the output shaft 121, the first gear 133 is pressed downward by the return spring 137.

Therefore, while the output shaft 121 of the output gear 120 rotates and the coupling part 133a of the first gear 133 is inserted into the coupling part insertion groove 135a of the second gear 135, the first gear 133 and the second gear 135 are coupled again.

A snap ring 139 is installed on the clutch shaft 131 between the return spring 137 and the upper surface of the first gear 133.

The snap ring 139 is provided on the clutch shaft 131 to allow the clutch shaft 131 to be manually pulled in case the clutch shaft 131 does not return to the original position due to the malfunction of the return spring 137.

Therefore, when the first gear 133 does not move downward due to the malfunction of the return spring 137 despite the disengagement of the pressing of the clutch shaft 131, when the clutch shaft 131 is pulled downward, the snap ring 139 moves downward together with the clutch shaft 131, so that the coupling part 133a of the first gear 133 is coupled to the coupling part insertion groove 135a of the second gear 135.

A third seal ring R3 is disposed on the clutch shaft below the second gear 135.

In the lower case 31 where the clutch shaft 131 is coupled when the clutch shaft 131 moves in the vertical (Y-Y') direction, a guide groove 31a is formed to guide the third seal ring R3 to move in the vertical (Y-Y') direction together with the clutch shaft 131, the guide groove 31a is formed extending to the inner surface of the lower case 31.

Therefore, the moving distance of the clutch shaft 131 in the upward direction is set by a distance D3 between the third seal ring R3 and the second gear 135.

In this way, by appropriately setting the distance D3 between the third seal ring R3 and the second gear 135, the moving distance of the clutch shaft 131 in the upward direction can be adjusted.

In the state where the coupling between the gears of the first gear 133 and the second gear 135 is disengaged, the second gear 135 may be supported by the third seal ring R3 and/or the lower case 31.

Therefore, in the state where the coupling between the gears of the first gear 133 and the second gear 135 is disengaged, the downward movement of the second gear 135 may be limited by the third sea ring R3 and/or the lower case 31.

However, when the second gear 135 is spaced apart from the inner surface of the lower case 31 by a certain distance, it is also possible to further form a separate support shaft for supporting the second gear 135 outside the clutch shaft 131.

In this case, in a state where the coupling between the gears of the first gear 133 and the second gear 135 is disengaged, the downward movement of the second gear 135 may be limited by a separate support shaft.

In addition, if a part of the second gear 135 is positioned below the motor 40 and a third gear 141, when disengaging the coupling between the gears of the first gear 133 and the second gear 135, the upward movement of the second gear 135 may be limited by the motor 40 and the second gear set 140.

The second gear set 140 is disposed adjacent to the first gear set 130 in the horizontal (X-X') direction.

The second gear set 140 is coupled to the first gear 133 and includes the third gear 141 in which a part of the second gear 135 is positioned at the lower portion.

In addition, the second gear set 140 is positioned above the third gear 141 and further includes a fourth gear 143 that rotates integrally with the third gear 141 and is coupled to the output gear 120.

The third gear 141 and the fourth gear 143 constituting the second gear set 140 may be formed as one body, or may be manufactured separately and coupled between gears with a structure similar to that of the first and second gears 133 and 135.

According to this configuration, since the power transmission gear is composed of the first gear set 130 and the second gear set 140, the configuration of the gear assembly 100 can be simplified.

The lower end of the output shaft 121 coupled with the output gear 120 is coupled to the stem 16 of the ball valve 10, and the upper end of the output shaft 121 protrudes out of the upper case 32.

In addition, a fourth seal ring R4 is disposed between the output shaft 121 and the lower case 31 between the lower end of the output shaft 121 and the output gear 120.

According to this configuration, it is possible to prevent the refrigerant flowing along the ball valve 10 from entering the inside of the valve actuator through a minute gap formed between the output shaft 121 and the lower case 31.

A fifth seal ring R5 is disposed between the output shaft 121 and the upper case between the upper end of the output shaft 121 and the output gear 120.

According to this configuration, it is possible to prevent moisture from entering the inside of the housing 30 through a minute gap formed between the upper case 32 and the output shaft 121.

In the upper case 32, a cap R6 covering the upper end of the output shaft 121 protruding out of the upper case 32 is installed.

In addition, the cap R6 covers the minute gap between the output shaft 121 and the upper cover 32.

According to this configuration, it is possible to more effectively prevent moisture from entering the inside of the housing 30 through the minute gap formed between the upper case 32 and the output shaft 121.

In the above, the valve actuator for controlling the ball valve provided in the air conditioning system has been described, but the valve actuator of the present disclosure can be applied to other valves for controlling a flow path of gas or fluid.

## Claims

1. A valve actuator comprising:
a housing (30) forming an exterior;
a motor (40) disposed in an inner space of the housing (30); and
a gear assembly (100) disposed in the inner space of the housing (30) and configured to transmit a driving force of the motor (40) to a ball valve (10),
a flange (20) adapted to be screwed to the ball valve (10);
a plurality of fastening members (50) combining the flange (20) with the housing (30), and including screws or bolts,
wherein the housing (30) includes a lower case (31) and an upper case (32) coupled to the lower case (31), and the lower case (31) includes a flange coupling part (34) to which the flange (20) is coupled by the plurality of fastening members (50),
wherein the gear assembly (100) includes:
an input gear (110) coupled to a rotation shaft of the motor (40) and rotating together with the rotation shaft;
an output gear (120) positioned apart from the input gear (110) in a horizontal direction, adapted to be coupled to a stem (16) of the ball valve (10), and configured
to transmit a rotational force of the input gear (110) to the stem (16); and
a power transmission gear (130, 140) transmitting the rotational force of the input gear (110) to the output gear (120),
**characterized in that** a seating part (31a) on which a protruding jaw (33a) of a middle plate (33) disposed in the inner space of the housing (30) is seated is formed at an upper end of the lower case (31), a first sealing ring (R1) is disposed on the seating part (31a), and the first sealing ring (R1) is supported by a lower end of the upper case (32), a seating part (31a) of the lower case (31), and a protruding jaw (33a) of the middle plate (33),
**in that** the power transmission gear (130, 140) includes:
a clutch shaft (131) having both ends coupled to the middle plate (33) and the lower case (31) so as to be movable in the vertical direction, and a first gear set (130) having a first gear (133) and a second gear (135) coupled to the clutch shaft (131) and being configured to be disengaged from each other or coupled to each other by vertical movement of the clutch shaft (131),
**and in that** a coupling part (133a) for coupling the first gear (133) to the second gear (135) is protruded from a lower surface of the first gear (133) coupled to the input gear (110), a coupling part insertion groove (135a) into which the coupling part (133a) of the first gear (133) is inserted is formed on an upper surface of the second gear (135), a push-up part (131a) is formed on the clutch shaft (131) to push the first gear (133) upward in contact with the coupling part (133a) of the first gear (133), and the push-up part (131a) is positioned in a push-up part insertion groove (133b) formed on a lower surface of the coupling part (133a) of the first gear (133).

2. The valve actuator of claim 1, wherein a second sealing ring (R2) is disposed between an upper surface of the flange (20) and a lower surface of the flange coupling part (34).

3. The valve actuator of claim 1 or 2, wherein the first gear (133) is pressed toward the second gear (135) by a return spring (137) disposed between the first gear (133) and the middle plate (33), and
wherein a snap ring (139) is installed on the clutch shaft (131) between the return spring (137) and an upper surface of the first gear (133).

4. The valve actuator of any one of claims 1 to 3, wherein a third sealing ring (R3) is disposed on the clutch shaft (131) below the second gear (135), and a guide groove (31a) is formed in the lower case (31) where the clutch shaft (131) is coupled and allow the third sealing ring (R3) to move in the vertical direction together with the clutch shaft (131) when the clutch shaft (131) moves in the vertical direction.

5. The valve actuator of claim 4, wherein a movement distance of the clutch shaft (131) in an upward direction is set by a gap (D3) between the third sealing ring (R3) and the second gear (135).

6. The valve actuator of claim 5, wherein a lower end of an output shaft (121) coupled to the output gear (120) is coupled to the stem (16) of the ball valve (10), an upper end of the output shaft (121) protrudes out of the upper case (32), and a fourth sealing ring (R4) is disposed between the output shaft (121) and the lower case (31) between the lower end of the output shaft (121) and the output gear (120), and
wherein a fifth sealing ring (R5) is disposed between the output shaft (121) and the upper case (32) between the upper end of the output shaft (121) and the output gear (120).

7. The valve actuator of any one of claims 1 to 6, wherein the power transmission gear (130, 140) further includes a second gear set (140) disposed adjacent to the first gear set (130) in the horizontal direction, and
wherein the second gear set (140) includes:
a third gear (141) coupled to the first gear (133); and
a fourth gear (143) positioned above the third gear (141), integrally rotating with the third gear (141), and coupled with the output gear (120).

8. The valve actuator of claim 7, wherein a cap (R6) covering the upper end of the output shaft (121) protruding out of the upper case (32) is installed in the upper case (32), and a gap formed between the upper case (32) and the output shaft (121) is covered by the cap (R6).

9. The valve actuator of any one of claims 1 or 8, wherein the flange (20) includes a tap part insertion hole (22) having a tap part (21), which is formed on an inner surface of the tap part insertion hole (22), to be screwed into a tap part (14) of the ball valve (10);
a stem insertion hole (23) communicating with the tap part insertion hole (22) and into which a stem (16) of the ball valve (10) is inserted; and
a plurality of long holes (24) positioned at a constant distance from a center of the tap part insertion hole (22) and formed long in a circumferential direction,
wherein the flange coupling part (34) includes a plurality of circular grooves (34a) into which the plurality of fastening members (50) passing through the plurality of long holes (24) are fastened, respectively.

10. The valve actuator of claim 9, wherein a chamfer (25) is formed on an inner surface of the tap part insertion hole (22) of the flange (20), and in a state in which the flange (20) and the ball valve (10) are coupled, the chamfer (25) of the flange (20) is contact with a chamfer (15) formed at an upper end of the tap part (14) of the ball valve (10).

11. The valve actuator of any one of claims 1 to 10, wherein the housing (30) has a power line passage hole (44) through which an external power line (42) for supplying power to the motor (40) passes,
in a state where the external power line (42) passes through, an adhesive (46) is applied to the power line passage hole (44),
wherein an inner surface of the housing (30) around the power line passage hole (44) is provided with an adhesive receiving groove (48) formed larger than the power line passage hole (44) and in which a portion of the adhesive (46) is positioned.

## Patentansprüche

1. Ventilaktuator, der aufweist:
ein Gehäuse (30), das eine Außenseite bildet;
einen Motor (40), der in einem Innenraum des Gehäuses (30) angeordnet ist; und
eine Zahnradbaugruppe (100), die in einem Innenraum des Gehäuses (30) angeordnet und konfiguriert ist, eine Antriebskraft des Motors (40) auf ein Kugelventil (10) zu übertragen;
einen Flansch (20), der dazu ausgelegt ist, am Kugelventil (10) angeschraubt zu sein;
mehrere Befestigungselemente (50), die den Flansch (20) mit dem Gehäuse (30) kombinieren und Schrauben oder Bolzen aufweisen,
wobei das Gehäuse (30) ein unteres Gehäuse (31) und ein oberes Gehäuse (32) aufweist, das mit dem unteren Gehäuse (31) gekoppelt ist, und das untere Gehäuse (31) eine Flanschverbindungskomponente (34) aufweist, mit der der Flansch (20) über die mehreren Befestigungselemente (50) gekoppelt ist,
wobei die Zahnradbaugruppe (100) aufweist:
ein Eingangszahnrad (110), das mit einer Rotationswelle des Motors (40) gekoppelt ist und zusammen mit der Rotationswelle rotiert;
ein Ausgangszahnrad (120), das vom Eingangszahnrad (110) in einer horizontalen Richtung beabstandet angeordnet ist, dazu ausgelegt ist, mit einem Schaft (16) des Kugelventils (10) gekoppelt zu werden, und konfiguriert ist, eine Rotationskraft des Eingangszahnrads (110) auf den Schaft (16) zu übertragen; und
ein Kraftübertragungszahnrad (130, 140), das die Rotationskraft des Eingangszahnrads (110) auf das Ausgangszahnrad (120) überträgt,
**dadurch gekennzeichnet, dass** eine Auflagekomponente (31a), auf der eine hervorstehende Klaue (33a) einer mittleren Platte (33), die im Innenraum des Gehäuses (30) angeordnet ist, aufgesetzt ist, am oberen Ende des unteren Gehäuses (31) ausgebildet ist, ein erster Dichtungsring (R1) an der Auflagekomponente (31a) angeordnet ist und der erste Dichtungsring (R1) von einem unteren Ende des oberen Gehäuses (32), einer Auflagekomponente (31a) des unteren Gehäuses (31) und einer hervorstehenden Klaue (33a) der mittleren Platte (33) gehalten wird,
dass das Kraftübertragungszahnrad (130, 140) aufweist:
eine Kopplungswelle (131), bei der beide Enden mit der mittleren Platte (33) und dem unteren Gehäuse (31) gekoppelt sind, um so in der vertikalen Richtung bewegbar zu sein, und ein erster Zahnradsatz (130), der ein erstes Zahnrad (133) und ein zweites Zahnrad (135) hat, die mit der Kopplungswelle (131) gekoppelt sind und konfiguriert sind, durch eine vertikale Bewegung der Kopplungswelle (131) voneinander getrennt oder miteinander gekoppelt zu werden,
und dadurch, dass eine Kopplungskomponente (133a) zum Koppeln des ersten Zahnrads (133) mit dem zweiten Zahnrad (135) von einer unteren Fläche des ersten Zahnrads (133) hervorsteht, das mit dem Eingangszahnrad (110) gekoppelt ist, eine Kopplungskomponenten-Einsetznut (135a), in die die Kopplungskomponente (133a) des ersten Zahnrads (133) eingesetzt ist, auf einer oberen Fläche des zweiten Zahnrads (135) ausgebildet ist, eine Komponente zum Hochdrücken (131a) an der Kopplungswelle (131) ausgebildet ist, um das erste Zahnrad (133) nach oben in Kontakt mit der Kopplungskomponente (133a) des ersten Zahnrads (133) zu drücken, und die Komponente zum Hochdrücken (131a) in einer Einsetznut (133b) der Komponente zum Hochdrücken, die an einer unteren Fläche der Kopplungskomponente (133a) des ersten Zahnrads (133) ausgebildet ist, positioniert ist.

2. Ventilaktuator nach Anspruch 1, wobei ein zweiter Dichtungsring (R2) zwischen einer oberen Fläche des Flansches (20) und einer unteren Fläche der Flanschkopplungskomponente (34) angeordnet ist.

3. Ventilaktuator nach Anspruch 1 oder 2, wobei das erste Zahnrad (133) durch eine Rückstellfeder (137) in Richtung des zweiten Zahnrads (135) gedrückt wird, die zwischen dem ersten Zahnrad (133) und der mittleren Platte (33) angeordnet ist, und
wobei ein Schnappring (139) an der Kopplungswelle (131) zwischen der Rückstellfeder (137) und einer oberen Fläche des ersten Zahnrads (133) eingebaut ist.

4. Ventilaktuator nach einem der Ansprüche 1 bis 3, wobei ein dritter Dichtungsring (R3) an der Kopplungswelle (131) unter dem zweiten Zahnrad (135) angeordnet ist, und eine Führungsnut (31a) im unteren Gehäuse (31) ausgebildet ist, wo die Kopplungswelle (131) gekoppelt ist, und dem dritten Dichtungselement (R3) ermöglicht, sich zusammen mit der Kopplungswelle (131) in der vertikalen Richtung zu bewegen, wenn sich die Kopplungswelle (131) in der vertikalen Richtung bewegt.

5. Ventilaktuator nach Anspruch 4, wobei ein Bewegungsabstand der Kopplungswelle (131) in einer Richtung nach oben durch einen Abstand (D3) zwischen dem dritten Dichtungselement (R3) und dem zweiten Zahnrad (135) festgelegt wird.

6. Ventilaktuator nach Anspruch 5, wobei ein unteres Ende einer Ausgangswelle (121), die mit dem Ausgangszahnrad (120) gekoppelt ist, mit dem Schaft (16) des Kugelventils (10) gekoppelt ist, ein oberes Ende der Ausgangswelle (121) aus dem oberen Gehäuse (32) hervorsteht, und ein vierter Dichtungsring (R4) zwischen der Ausgangswelle (121) und dem unteren Gehäuse (31) zwischen dem unteren Ende der Ausgangswelle (121) und dem Ausgangszahnrad (120) angeordnet ist, und
wobei ein fünfter Dichtungsring (R5) zwischen der Ausgangswelle (121) und dem oberen Gehäuse (32) zwischen dem oberen Ende der Ausgangswelle (121) und dem Ausgangszahnrad (20) angeordnet ist.

7. Ventilaktuator nach einem der Ansprüche 1 bis 6, wobei das Kraftübertragungszahnrad (130, 140) weiterhin einen zweiten Zahnradsatz (140) aufweist, der benachbart zum ersten Zahnradsatz (130) in der horizontalen Richtung angeordnet ist, und
wobei der zweite Zahnradsatz (140) aufweist:
ein drittes Zahnrad (141), das mit dem ersten Zahnrad (133) gekoppelt ist; und
ein viertes Zahnrad (143), das über dem dritten Zahnrad (141) angeordnet ist, integral mit dem dritten Zahnrad (141) rotiert und mit dem Ausgangszahnrad (120) gekoppelt ist.

8. Ventilaktuator nach Anspruch 7, wobei eine Kappe (R6), die das obere Ende der Ausgangswelle (121) abdeckt, die aus dem oberen Gehäuse (32) heraussteht, im oberen Gehäuse (32) eingebaut ist, und ein Abstand, der zwischen dem oberen Gehäuse (32) und der Ausgangswelle (121) ausgebildet ist, von der Kappe (R6) abgedeckt wird.

9. Ventilaktuator nach einem der Ansprüche 1 bis 8, wobei der Flansch (20) eine Verzweigungskomponenten-Einsetzöffnung (22) aufweist, die eine Verzweigungskomponente (21) hat, die an einer Innenfläche der Verzweigungskomponenten-Einsetzöffnung (22) ausgebildet ist, um in eine Verzweigungskomponente (14) des Kugelventils (10) eingeschraubt zu werden;
eine Schafteinsetzöffnung (23), die mit der Verzweigungskomponenten-Einsetzöffnung (22) in Austausch steht und in die ein Schaft (16) des Kugelventils (10) eingesetzt ist; und
mehrere Langlöcher (24), die an einem konstanten Abstand von einem Mittelpunkt der Verzweigungskomponenten-Einsetzöffnung (22) angeordnet sind und in der Umfangsrichtung lang ausgebildet sind,
wobei die Flanschkopplungskomponente (34) mehrere kreisförmige Nuten (34a) aufweist, in denen jeweils mehrere Befestigungselemente (50), die durch die mehreren Langlöcher (24) hindurchgehen, befestigt sind.

10. Ventilaktuator nach Anspruch 9, wobei eine Abschrägung (25) an einer Innenfläche der Verzweigungskomponenten-Einsetzöffnung (22) des Flansches (20) ausgebildet ist, und in einem Zustand, in dem der Flansch (20) und das Kugelventil (10) gekoppelt sind, die Abschrägung (25) des Flansches (20) in Kontakt mit einer Abschrägung (15) steht, die an einem oberen Ende der Verzweigungskomponente (14) des Kugelventils (10) ausgebildet ist.

11. Ventilaktuator nach einem der Ansprüche 1 bis 10, wobei das Gehäuse (30) eine Stromleitung-Durchgangsöffnung (44) hat, durch die eine externe Stromleitung (42) zum Zuleiten von Strom an den Motor (40) hindurchgeht,
in einem Zustand, in dem die externe Stromleitung (42) hindurchgeht, ein Klebemittel (46) auf die Stromleitungs-Durchgangsöffnung (44) aufgetragen wird,
wobei eine Innenfläche des Gehäuses (30) um die Stromleitungs-Durchgangsöffnung (44) mit einer Klebeaufnahmenut (48) vorgesehen ist, die größer als die Stromleitungs-Durchgangsöffnung (44) ausgebildet ist und in der ein Abschnitt des Klebemittels (46) angeordnet wird.

## Revendications

1. Actionneur de vanne comprenant :
un logement (30) formant un extérieur ;
un moteur (40) disposé dans un espace intérieur du logement (30) ; et
un assemblage d'engrenages (100) disposé dans l'espace intérieur du logement (30) et configuré pour transmettre une force d'entraînement du moteur (40) à une vanne à boisseau sphérique (10),
une bride (20) adaptée pour être vissée sur la vanne à boisseau sphérique (10) ;
une pluralité d'éléments de fixation (50) combinant la bride (20) avec le logement (30), et incluant des vis ou des boulons,
dans lequel le logement (30) inclut un boîtier inférieur (31) et un boîtier supérieur (32) couplé au boîtier inférieur (31), et le boîtier inférieur (31) inclut une partie de couplage de bride (34) à laquelle la bride (20) est couplée via la pluralité d'éléments de fixation (50),
dans lequel l'assemblage d'engrenages (100) inclut :
un engrenage d'entrée (110) couplé à un arbre rotatif du moteur (40) et étant mis en rotation conjointement avec l'arbre rotatif ;
un engrenage de sortie (120) positionné à distance de l'engrenage d'entrée (110) dans une direction horizontale, adapté pour être couplé à une tige (16) de la vanne à boisseau sphérique (10), et configuré pour transmettre une force de rotation de l'engrenage d'entrée (110) à la tige (16) ; et
un engrenage de transmission de puissance (130, 140) transmettant la force de rotation de l'engrenage d'entrée (110) à l'engrenage de sortie (120),
**caractérisé en ce que**
une partie de siège (31a) sur laquelle une mâchoire en projection (33a) d'une plaque médiane (33) disposée dans l'espace intérieur du boîtier (30) est assise est formée au niveau d'une extrémité supérieure du boîtier inférieur (31), une première bague d'étanchéité (R1) est disposée sur la partie de siège (31a), et la première bague d'étanchéité (R1) est supportée par une extrémité inférieure du boîtier supérieur (32), une partie de siège (31a) du boîtier inférieur (31), et une mâchoire en projection (33a) de la plaque médiane (33),
**en ce que**
l'engrenage de transmission de puissance (130, 140) inclut : un arbre d'embrayage (131) ayant les deux extrémités couplées à la plaque médiane (33) et au boîtier inférieur (31) de manière à pouvoir être déplacé dans la direction verticale, et un ensemble de premiers engrenages (130) ayant un premier engrenage (133) et un deuxième engrenage (135) couplés à l'arbre d'embrayage (131) étant configurée pour être désengagés l'un de l'autre ou couplés l'un à l'autre via un déplacement vertical de l'arbre d'embrayage (131),
et **en ce que**
une partie de couplage (133a) destinée à coupler le premier embrayage (133) au second embrayage (135) est en projection depuis une surface inférieure du premier embrayage (133) couplé à l'engrenage d'entrée (110), une rainure d'insertion de partie de couplage (135a) dans laquelle la partie de couplage (133a) du premier engrenage (133) est insérée est formée sur une surface supérieure du deuxième engrenage (135), une partie de poussée vers le haut (131a) est formée sur l'arbre d'embrayage (131) pour pousser le premier engrenage (133) vers le haut en contact avec la partie de couplage (133a) du premier engrenage (133), et la partie de poussée vers le haut (131a) est positionnée dans une rainure d'insertion (133b) de partie de poussée vers le haut formée sur une surface inférieure de la partie de couplage (133a) du premier engrenage (133).

2. Actionneur de vanne selon la revendication 1, dans lequel une deuxième bague d'étanchéité (R2) est disposée entre une surface supérieure de la bride (20) et une surface inférieure de la partie de couplage de bride (34).

3. Actionneur de vanne selon la revendication 1 ou 2, dans lequel le premier engrenage (133) est pressé vers le deuxième engrenage (135) au moyen d'un ressort de rappel (137) disposé entre le premier engrenage (133) et la plaque médiane (33), et
dans lequel un circlip (139) est installé sur l'arbre d'embrayage (131) entre le ressort de rappel (137) et une surface supérieure du premier engrenage (133).

4. Actionneur de vanne selon l'une quelconque des revendications 1 à 3, dans lequel une troisième bague d'étanchéité (R3) est disposée sur l'arbre d'embrayage (131) en dessous du deuxième engrenage (135), et une rainure de guidage (31a) est formée dans le boîtier inférieur (31) où l'arbre d'embrayage (131) est couplé et permet à la troisième bague d'étanchéité (R3) de se déplacer dans la direction verticale conjointement avec l'arbre d'embrayage (131) quand l'arbre d'embrayage (131) se déplace dans la direction verticale.

5. Actionneur de vanne selon la revendication 4, dans lequel une distance de déplacement de l'arbre d'embrayage (131) dans une direction vers le haut est définie par un intervalle (D3) entre la troisième bague d'étanchéité (R3) et le deuxième engrenage (135).

6. Actionneur de vanne selon la revendication 5, dans lequel une extrémité inférieure d'un arbre de sortie (121) couplé à l'engrenage de sortie (120) est couplée à la tige (16) de la vanne à boisseau sphérique (10), une extrémité supérieure de l'arbre de sortie (121) se projette hors du boîtier supérieur (32), et une quatrième bague d'étanchéité (R4) est disposée entre l'arbre de sortie (121) et le boîtier inférieur (31) entre l'extrémité inférieure de l'arbre de sortie (121) et l'engrenage de sortie (120), et
dans lequel une cinquième bague d'étanchéité (R5) est disposée entre l'arbre de sortie (121) et le boîtier supérieur (32) entre l'extrémité supérieure de l'arbre de sortie (121) et l'engrenage de sortie (120).

7. Actionneur de vanne selon l'une quelconque des revendications 1 à 6, dans lequel l'engrenage de transmission de puissance (130, 140) inclut en outre un second ensemble d'engrenages (140) disposé de manière adjacente au premier ensemble d'engrenages (130) dans la direction horizontale, et
dans lequel le second ensemble d'engrenages (140) inclut :
un troisième engrenage (141) couplé au premier engrenage (133) ; et
un quatrième engrenage (143) positionné au-dessus du troisième engrenage (141), en rotation intégrale avec le troisième engrenage (141), et couplé à l'engrenage de sortie (120).

8. Actionneur de vanne selon la revendication 7, dans lequel un capuchon (R6) recouvrant l'extrémité supérieure de l'arbre de sortie (121) se projetant hors du boîtier supérieur (32) est installé dans le boîtier supérieur (32), et un intervalle formé entre le boîtier supérieur (32) et l'arbre de sortie (121) est recouvert par le capuchon (R6).

9. Actionneur de vanne selon l'une quelconque des revendications 1 ou 8, dans lequel la bride (20) inclut un trou d'insertion de partie robinet (22) ayant une partie robinet (21), qui est formée sur une surface intérieure du trou d'insertion de partie robinet (22), pour être vissée jusque dans une partie robinet (14) de la vanne à boisseau sphérique (10) ;
un trou d'insertion de tige (23) en communication avec le trou d'insertion de partie robinet (22) et dans lequel une tige (16) de la vanne à boisseau sphérique (10) est insérée ; et
une pluralité de trous oblongs (24) positionnés à une distance constante par rapport à un centre du trou d'insertion de partie robinet (22) sont formés en long dans une direction circonférentielle,
dans lequel la partie de couplage de bride (34) inclut une pluralité de rainures circulaires (34a) dans lesquelles la pluralité d'éléments de fixation (50) passant à travers la pluralité de trous oblongs (24) sont fixés, respectivement.

10. Actionneur de vanne selon la revendication 9, dans lequel un chanfrein (25) et formé sur une surface intérieure du trou d'insertion de partie robinet (22) de la bride (20), et dans un état dans lequel la bride (20) et la vanne à boisseau sphérique (10) sont couplées, le chanfrein (25) de la bride (20) est en contact avec un chanfrein (15) formé au niveau d'une extrémité supérieure de la partie robinet (14) de la vanne à boisseau sphérique (10).

11. Actionneur de vanne selon l'une quelconque des revendications 1 à 10, dans lequel le logement (30) a un trou de passage de ligne de puissance (44) à travers lequel une ligne de puissance externe (42) destinée à alimenter une puissance au moteur (40) passe,
dans un état dans lequel la ligne de puissance externe (42) passe à travers le trou, un adhésif (46) est appliqué sur le trou de passage de ligne de puissance (44),
dans lequel une surface intérieure du logement (30) autour du trou de passage de ligne de puissance (44) est pourvue d'une rainure de réception d'adhésif (48) formée plus grande que le trou de passage de ligne de puissance (44) et dans lequel une portion de l'adhésif (46) est positionnée.
